# EUROPÄISCHE PATENTANMELDUNG

(11) **EP 4 621 264 A1**
(43) Veröffentlichungstag der Anmeldung: **24.09.2025**
(21) Anmeldenummer: 25165413.3
(22) Anmeldetag: 21.03.2025
(51) Int. Cl.: F16H 49/00

(54) **GETRIEBE**

(30) Priorität: 21.03.2024 LU 506641
(71) Anmelder: Ovalo GmbH, 65555 Limburg (DE)
(72) Erfinder: Yilmaz, Anil-Cem, 35641 Aßlar (DE); Meudt, Marvin, 56410 Montabaur (DE)
(74) Vertreter: Hoffmann, Jürgen

(57) **Zusammenfassung**

Die Erfindung betrifft ein Getriebe mit einem Getriebegehäuse und mit einem von dem Getriebegehäuse verschiedenen Getriebebauteil, welches ein Drehmoment überträgt oder ein Drehmoment abstützt. Das Getriebe zeichnet sich dadurch aus, dass das das Getriebebauteil ein erstes Getriebebauteilelement und ein zweites Getriebebauteilelement aufweist, die mittels wenigstens eines Verbinders, der an dem ersten Getriebebauteilelement und/oder an dem zweiten Getriebebauteilelement befestigt ist, elastisch beweglich miteinander verbunden sind.

## Beschreibung

Die Erfindung betrifft ein Getriebe mit einem Getriebegehäuse und mit einem von dem Getriebegehäuse verschiedenen Getriebebauteil, welches ein Drehmoment überträgt oder ein Drehmoment abstützt.

Getriebe sind in unterschiedlichen Bauformen bekannt und dienen dazu, Bewegungsgrößen zu ändern, wobei es sich bei der Bewegung oftmals um eine Rotationsbewegung handelt. Eine mögliche Bauform ist ein Spannungswellengetriebe.

Ein Spannungswellengetriebe besitzt zumeist ein starres, im Querschnitt kreisförmiges, innenverzahntes Zahnrad, das Circularspline genannt wird, und ein flexibles außenverzahntes Zahnrad, das Flexspline genannt wird und das in dem von einem starren, innenverzahnten Zahnrad umgebenen Raumvolumen angeordnet ist. Innerhalb des Flexsplines ist ein zumeist ovaler Wellengenerator rotierbar angeordnet, dessen Außenumfang einen Lagersitz für ein radialflexibles Wälzlager aufweist. Über das radialflexible Wälzlager steht der Wellengenerator mit dem radialflexiblen, außenverzahnten Zahnrad in Kontakt. Das radialflexible Wälzlager ermöglicht es, den Wellengenerator relativ zu dem radialflexiblen, außenverzahnten Zahnrad rotieren zu können. Der Wellengenerator biegt das Wälzlager und den Flexspline zu einer ovalen Form, um die Verzahnungen des Circularsplines und des Flexsplines in der Hochachse des ovalen Wellengenerators miteinander in Eingriff zu bringen.

Der Flexspline weist eine geringere Anzahl von Zähnen auf als der Circularspline. Wenn der Wellengenerator rotiert, wälzt die Außenseite des Flexsplines auf der Innenseite des Circularsplines ab, wobei die Zähne des Flexsplines an gegenüberliegenden Seiten umlaufend in und außer Eingriff mit den Zähnen des Circularsplines gelangen. Aufgrund des Unterschiedes der Zähneanzahlen kommt es zu einer Drehung des Flexsplines relativ zu dem Circularspline, wenn der Wellengenerator rotiert und der Flexspline, beispielsweise relativ zu dem Getriebegehäuse, festgehalten wird. Der Wellengenerator ist zumeist elliptisch ausgebildet. Es ist jedoch jede von der Kreisform abweichende Form möglich, die im Ergebnis den beschriebenen Eingriff der Verzahnung des flexiblen, außenverzahnten Zahnrades in die Verzahnung des starren innenverzahnten Zahnrades bewirkt. Auch ist es möglich, den Wellengenerator derart auszubilden, dass die Verzahnung des Flexsplines an drei oder mehr Stellen in die Verzahnung des Circularsplines eingreift.

In Ringbauweise eines Spannungswellengetriebes sind zwei innenverzahnte, starre Hohlräder (Circularspline und Dynamicspline) mit unterschiedlicher Zähnezahl vorhanden, deren Verzahnungen mit der Außenverzahnung der radialflexiblen, außenverzahnten Hülse (Flexspline) in Zahneingriff stehen. Hierbei weist eines der innenverzahnten Hohlräder dieselbe Anzahl von Zähnen auf wie der Flexspline, während das andere innenverzahnte Hohlrad mehr Zähne aufweist als der Flexspline.

Aus WO 2010 142318 A1 ist eine Vorrichtung zur Messung des Drehmoments, das auf eine Abtriebswelle eines Spannungswellengetriebes übertragen wird, bekannt. Die Vorrichtung weist ein Gehäuse, einen in dem Gehäuse montierten Circularspline und einen an die Abtriebswelle montierten Flexspline auf. Die Vorrichtung umfasst außerdem Sensoren, die zur Messung von Kräften zwischen dem Circularspline und dem Gehäuse angeordnet sind, sowie eine Recheneinheit, die Messsignale von den Sensoren empfängt und auf dieser Grundlage das übertragene Drehmoment berechnet.

Aus der europäischen Patentanmeldung EP 4 257 848 A1 ist ein Getriebesystem bekannt, das ein Drehmomentabstützelement und ein Dreiwellengetriebe beinhaltet. Das Dreiwellengetriebe weist wenigstens ein, insbesondere ringförmiges, Zahnrad auf. Das Zahnrad ist als Flansch ausgebildet oder weist einen Flansch auf. Das Zahnrad ist mittels eines elastisch verformbaren Koppelbauteils, das einen mit dem Flansch drehfest verbundenen Gegenflansch aufweist, an dem Drehmomentabstützelement festgelegt.

Aus dem deutschen Patent DE 10 2020 107 674 B3 ist eine Spannungswellengetriebeeinrichtung bekannt, die ein Spannungswellengetriebe mit einem ersten Zahnrad, das als Circularspline fungiert, einem zweiten Zahnrad, das als Flexspline fungiert, einem Wellengenerator und einem räumlich feststehenden Bauteil, wobei eine Codierungsverkörperung an einem der Zahnräder oder dem Wellengenerator angeordnet ist und am räumlich feststehenden Bauteil wenigstens ein Sensor vorgesehen ist, welcher dazu ausgebildet ist, die Codierungsverkörperung kontaktlos zu erfassen.

Aus der deutschen Offenlegungsschrift DE 10 2016 204 784 A1 ist ein Wellgetriebe mit einem Wellengenerator bekannt. Das Wellgetriebe weist ein mittels des Wellengenerators verformbares und außenverzahntes Getriebeelement auf, das mit einem innenverzahnten Getriebeelement in Zahneingriff steht. Das innenverzahnte Getriebeelement ist über mehrere Blattfedern mit einem Gehäusebauteil verbunden.

Es ist die Aufgabe der vorliegenden Erfindung, ein Getriebe anzugeben, das einen erhöhten Funktionsumfang bietet und das effizient herstellbar ist.

Die Aufgabe wird durch ein Getriebe gelöst, das dadurch gekennzeichnet ist, dass das Getriebebauteil ein erstes Getriebebauteilelement und ein zweites Getriebebauteilelement aufweist, die mittels wenigstens eines Verbinders, der an dem ersten Getriebebauteilelement und/oder an dem zweiten Getriebebauteilelement befestigt ist, elastisch beweglich, insbesondere relativ zueinander drehbar, miteinander verbunden sind.

Die Erfindung hat den ganz besonderen Vorteil, dass innerhalb des Getriebes eine elastische Ausgleichsmöglichkeit geschaffen ist, die das Getriebe vor einer Beschädigung im Überlastfall schützt. Hierzu ist der wenigstens eine Verbinder wenigstens teilweise elastisch verformbar ausgebildet. Insbesondere kann vorteilhaft vorgesehen sein, dass zumindest ein Verformungsabschnitt des Verbinders elastisch verformbar ausgebildet ist.

Das Getriebe kann vorteilhaft in der Weise ausgebildet sein, dass der Verbinder mit dem ersten Getriebebauteilelement gemeinsam einstückig hergestellt ist und einen Befestigungsabschnitt aufweist, mittels dem er an dem zweiten Getriebebauteilelement befestigt ist. Es kann alternativ vorgesehen sein, dass der Verbinder mit dem zweiten Getriebebauteilelement gemeinsam einstückig hergestellt ist und einen Befestigungsabschnitt aufweist, mittels dem er an dem ersten Getriebebauteilelement befestigt ist. Eine solche Ausführung ist besonders robust und einfach zusammenfügbar.

Alternativ kann vorteilhaft vorgesehen sein, dass der Verbinder einen ersten Befestigungsabschnitt aufweist, mittels dem er an dem ersten Getriebebauteilelement befestigt ist, und dass der Verbinder außerdem einen zweiten Befestigungsabschnitt aufweist, mittels dem er an dem zweiten Getriebebauteilelement befestigt ist. Eine solche Ausführung erlaubt ein ganz besonders flexibles Herstellen von Getrieben mit unterschiedlichen Eigenschaften.

Die Befestigung des Verbinders mit dem ersten Getriebebauteilelement und/oder mit dem zweiten Getriebebauteilelement kann beispielsweise eine kraftschlüssige Verbindung aufweisen oder als ausschließlich kraftschlüssige Verbindung ausgebildet sein. Beispielsweise kann vorteilhaft vorgesehen sein, dass ein Befestigungsabschnitt des Verbinders zwischen zwei Teilen des Getriebebauteilelements eingeklemmt wird, wobei beispielsweise eine Klemmschraube und/oder eine Feder vorhanden sein kann, um die Klemmkraft bereitzustellen.

Alternativ oder zusätzlich kann die Befestigung des Verbinders mit dem ersten Getriebebauteilelement und/oder mit dem zweiten Getriebebauteilelement eine formschlüssige Verbindung, insbesondere eine Steckverbindung, aufweisen. Es ist vorteilhaft auch möglich, dass die Befestigung des Verbinders mit dem ersten Getriebebauteilelement und/oder dem zweiten Getriebebauteilelement als ausschließlich formschlüssige Verbindung ausgebildet ist.

Bei einer ganz besonders vorteilhaften Ausführung ist die Befestigung des Verbinders mit dem ersten Getriebebauteilelement und/oder dem zweiten Getriebebauteilelement zerstörungsfrei lösbar ausgebildet. Eine solche Ausführung ist ganz besonders flexibel verwendbar, insbesondere im Hinblick auf eine spätere Umrüstung des Getriebes. Beispielsweise kann ein Verbinder, der keinen Sensor aufweist, bei einer solchen Ausführung einfach gegen einen Verbinder, der einen Sensor aufweist oder als Sensor ausgebildet ist, ausgetauscht werden.

Es ist auch möglich, dass die Befestigung des Verbinders mit dem ersten Getriebebauteilelement und/oder dem zweiten Getriebebauteilelement eine stoffschlüssige Verbindung aufweist oder als ausschließlich stoffschlüssige Verbindung ausgebildet ist. Eine solche Ausführung ist besonders robust, jedoch weniger flexibel im Hinblick auf ein einfaches späteres Umrüsten des Getriebes.

Bei einer ganz besonders vorteilhaften Ausführung ist der Befestigungsabschnitt als Steckabschnitt ausgebildet oder weist einen Steckabschnitt auf, der, insbesondere passgenau, in eine Steckausnehmung des Getriebebauteilelements eingreift. Insbesondere kann vorteilhaft vorgesehen sein, dass der Steckabschnitt axial oder radial in die Steckausnehmung des Getriebebauteilelements eingreift. Bei einer solchen Ausführung ist die Steckverbindung weitestgehend von den bei Belastung des Getriebes in Umfangsrichtung wirkenden Kräften entkoppelt, so dass ein ungewolltes Lösen der Steckverbindung verhindert ist.

Ganz allgemein kann vorteilhaft vorgesehen sein, dass der Verbinder wenigstens einen Druckabschnitt aufweist, der durch das von dem Getriebebauteil übertragene und/oder abgestützte Drehmoment auf Druck, insbesondere ausschließlich auf Druck, belastet wird. Eine solche Ausführung ermöglicht es beispielsweise, die Druckkräfte zu messen und aus den gemessenen Druckkräften auf das über das Getriebebauteil übertragene Drehmoment zu schließen. Der Druckabschnitt kann insbesondere als Druckstab ausgebildet sein. Der Druckstab kann seinerseits durch einen Schenkel des Verbinders, insbesondere einen von mehreren Schenkeln des Verbinders, gebildet sein.

Ebenfalls ganz allgemein kann vorteilhaft vorgesehen sein, dass der Verbinder wenigstens einen Zugabschnitt aufweist, der durch das von dem Getriebebauteil übertragene und/oder abgestützte Drehmoment auf Zug, insbesondere ausschließlich auf Zug, belastet wird. Eine solche Ausführung ermöglicht es beispielsweise, die Zugkräfte zu messen und aus den gemessenen Zugkräften auf das über das Getriebebauteil übertragene Drehmoment zu schließen. Der Zugabschnitt kann insbesondere als Zugstab ausgebildet sein. Der Zugstab kann seinerseits durch einen Schenkel des Verbinders, insbesondere einen von mehreren Schenkeln des Verbinders, gebildet sein.

Bei einer ganz besonders vorteilhaften Ausführung weist der Verbinder wenigstens einen Druckabschnitt und wenigstens einen Zugabschnitt auf. Eine solche Ausführung ermöglicht es beispielsweise, die Druckkräfte und die Zugkräfte zu messen und aus den gemessenen Druckkräften und den gemessenen Zugkräften auf das über das Getriebebauteil übertragene und/oder abgestützte Drehmoment zu schließen. Eine solche Drehmomentmessung ist besonders genau und robust gegenüber Störgrößen.

Ein einheitlicher und ausschließlicher Typ von auf den Verbinder wirkenden Belastungen, nämlich vorzugsweise ausschließlich Zug- und/oder Druckbelastungen, ist besonders Vorteilhaft, um bei der Auswertung der Messsignale Störgrößen ausschließen zu können.

Insbesondere kann vorgesehen sein, dass ein Abschnitt des Verbinders bei einer Rotationsrichtung einer Welle des Getriebes, beispielsweise der Antriebswelle des Getriebes, den Druckabschnitt und bei einer entgegengesetzten Rotationsrichtung der Welle den Zugabschnitt bildet.

Der Verbinder kann vorteilhaft einen u-förmigen Querschnitt aufweisen. Eine solche Ausführung erlaubt es beispielsweise, einen der Schenkel des im Querschnitt u-förmigen Verbinders, insbesondere axial oder radial, zum Zwecke der Befestigung in eine erste Steckausnehmung des ersten Getriebebauteilelements, insbesondere klemmend und/oder passgenau, einzustecken und den anderen Schenkel des im Querschnitt u-förmigen Verbinders, insbesondere axial oder radial, zum Zwecke der Befestigung in eine zweite Steckausnehmung des zweiten Getriebebauteilelements, insbesondere klemmend und/oder passgenau, einzustecken.

Der Verbinder kann vorteilhaft einen s-förmigen Querschnitt oder einen x-förmigen Querschnitt oder einen v-förmigen Querschnitt aufweisen. Beispielsweise können bei einer solchen Ausführung axiale Steckzapfen vorhanden sein, die zum Zwecke der Befestigung in axiale Steckausnehmungen des ersten und/oder zweiten Getriebebauteilelements eingesteckt werden.

Bei einer ganz besonders vorteilhaften Ausführung ist der Verbinder derart ausgebildet, dass, insbesondere je nach Vorzeichen des Drehmomentes, wenigstens ein Schenkel des Verbinders der Zugabschnitt und wenigstens ein weiterer Schenkel des Verbinders der Druckabschnitt ist. Eine solche Ausführung ist besonders präzise und erlaubt eine genaue Drehmomentmessung, wenn die Schenkel als Teil eines Verformungssensors fungieren, wobei beispielsweise auf die einzelnen Schenkel jeweils zumindest ein Dehnungsmessstreifen aufgeklebt sein kann. Es können jedoch alternativ oder zusätzlich zu wenigstens einem Dehnungsmessstreifen auch andere Messmittel, beispielsweise ein piezobasierter Längenmesssensor, zum Erfassen der Verformung des Verbinders vorhanden sein.

In Bezug auf die Richtung des Drehmoments gilt üblicherweise die Konvention, dass ein im Uhrzeigersinn wirkendes Drehmoment als negativ und ein gegen den Uhrzeigersinn wirkendes Drehmoment als positiv betrachtet wird. Diese Festlegung basiert auf der sogenannten Rechte-Hand-Regel: Wenn man die Finger der rechten Hand in Richtung der Drehbewegung krümmt, zeigt der Daumen in die Richtung des positiven Drehmoments entlang der Drehachse.

Der Verbinder kann ganz allgemein vorteilhaft wenigstens zwei Schenkel aufweisen, wobei insbesondere einer der Schenkel den Druckabschnitt und der andere den Zugabschnitt bildet.

Wie bereits erwähnt, kann der wenigstens eine Verbinder als Sensor ausgebildet sein oder Teil eines Sensors sein.

Bei einer solchen Ausführung ist es insbesondere ermöglicht, die elastisch bewegliche Verbindung des ersten Getriebebauteilelements mit dem zweiten Getriebebauteilelement für eine Kraft- und/oder Drehmomentmessung zu nutzen. Hierbei kann der Verbinder, insbesondere ein Verformungsabschnitt des Verbinders, als Teil eines Kraftmesssensors fungieren, wobei die jeweilige Verformung beispielsweise mittels Dehnungsmessstreifen erfasst werden kann, die an dem Verbinder angebracht, insbesondere aufgeklebt, sind.

Der Sensor ist vorzugsweise nicht zur unmittelbaren Messung von Kräften und Drehmomenten zwischen dem Circularspline und dem Gehäuse angeordnet und ausgebildet, weil eine solche Ausführung unnötig viel Bauraum beansprucht, konstruktiv besonders aufwendig ist und der Zusammenbau besonders schwierig ist.

Vorzugsweise sind die elastisch verformbaren Abschnitte des Verbinders derart ausgebildet, dass ein wirksames Drehmoment zu einer vorzugsweise oder ausschließlich reinen Zug-, Druck- oder Schubbeanspruchung eines elastisch verformbaren Abschnitts eines Verbinders führen. Dies hat den besonderen Vorteil, dass der Verbinder besonders kompakt ausgeführt sein kann und somit einen geringen Bauraumbedarf hat. Zudem erlaubt dies eine einfache theoretische Modellbildung und eine verbesserte Verringerung von Störgrößen.

Es ist allerdings auch möglich, dass der Sensor als Temperatursensor oder als Vibrationssensor ausgebildet ist.

Das Getriebe oder ein mit dem Getriebe ausgerüsteter Aktuator können eine, insbesondere elektronischer, Auswertevorrichtung aufweisen, an die der Sensor bzw. die mehreren Sensoren angeschlossen sind. Insbesondere kann vorgesehen sein, dass die Auswertevorrichtung Messsignale des Sensors bzw. der mehreren Sensoren empfängt. Die Auswertevorrichtung kann die Messsignale weiterverarbeiten und beispielsweise Ausgabesignale erzeugen, die weiterverarbeitet und/oder dem Benutzer beispielsweise über ein Display angezeigt werden können. Die Ausgabesignale können beispielsweise einen (insbesondere auf eine Einheit wie beispielsweise Nm bezogenen) Drehmomentwert oder einen (insbesondere auf eine Einheit wie beispielsweise Grad Celsius bezogene) Temperatur betreffen. Alternativ oder zusätzlich kann vorgesehen sein, dass die Auswertevorrichtung den Sensor bzw. die Sensoren mit elektrischer Energie versorgt.

Bei einer ganz besonders vorteilhaften Ausführung weist das Getriebe mehrere Verbinder mit unterschiedlichen Sensoren auf. Beispielsweise kann das erfindungsgemäße Getriebe einen Drehmomentsensor, einen Temperatursensor und einen Vibrationssensor aufweisen. Hierbei kann insbesondere vorteilhaft vorgesehen sein, dass die einzelnen Verbinder, die die unterschiedlichen Sensoren aufweisen, hinsichtlich Form und Größe gleich ausgebildet und insoweit mechanisch alle auf dieselbe Weise an dem ersten Getriebebauteilelement und dem zweiten Getriebebauteilelement des Getriebes befestigt sein können. Auf diese Weise kann durch die entsprechende Auswahl einer individuellen Kombination unterschiedlicher Verbinder die jeweils gewünschte Konfiguration des herzustellenden Getriebes einfach und effizient realisiert werden.

Beispielsweise können mehrere Verbinder derart angeordnet sein, dass die Abstände unmittelbar benachbarter Verbinder gleich sind. Insbesondere kann vorteilhaft vorgesehen sein, dass die Abstände aller unmittelbar benachbarter Verbinder gleich sind.

Es ist allerdings alternativ auch möglich, dass mehrere Verbinder derart angeordnet sind, dass die Abstände unmittelbar benachbarter Verbinder ungleich sind.

Bei einer ganz besonders sicheren Ausführung des erfindungsgemäßen Getriebes ist der wenigstens eine Verbinder dazu ausgebildet, zu brechen, und/oder ist die Befestigung des Verbinders mit dem Getriebebauteilelement dazu ausgebildet, sich zu lösen, wenn das Drehmoment einen vorgegebenen Wert übersteigt. Auf diese Weise wird vorteilhaft erreicht, dass die übrigen Bauteile des Getriebes im Überlastfall nicht beschädigt werden und das Getriebe durch einen vergleichsweise einfachen Austausch des gebrochenen Verbinders (falls mehrere vorhanden: der gebrochenen Verbinder) bzw. durch ein Wiederherstellen der gelösten Verbindung (falls mehrere vorhanden: der gelösten Verbindungen) einfach und kostengünstig wieder funktionstüchtig gemacht werden kann.

Alternativ kann der wenigstens eine Verbinder, insbesondere wenn er mit einem Sensor ausgerüstet ist, derart ausgebildet sein, dass ein anderes Bauteil des Getriebes bei einer Überlastung versagt, bevor der Verbinder beschädigt wird. Auf diese Weise ist gewährleistet, dass ein teurer Verbinder nach einer Überlastung des Getriebes wiederverwendet werden kann.

Das Getriebebauteil und/oder das erste Getriebebauteilelement und/oder das zweite Getriebebauteilelement können vorteilhaft ringförmig ausgebildet sein. Beispielsweise kann es sich bei dem Getriebebauteil um ein verzahntes, insbesondere innenverzahntes, Hohlrad, insbesondere eines Spannungswellengetriebes oder eines Planetengetriebes, handeln.

Bei einer vorteilhaften Ausführung weist das Getriebebauteil eine Verzahnung auf. Insbesondere kann es sich bei dem Getriebebauteil um ein Zahnrad und/oder eine Welle handeln. Insbesondere kann vorteilhaft vorgesehen sein, dass das erste Getriebebauteilelement eine Verzahnung aufweist und/oder das zweite Getriebebauteilelement eine Verzahnung aufweist.

Bei einer besonders vorteilhaften Ausführung ist das Getriebebauteil Teil eines Lagers, mittels dem eine Getriebewelle rotierbar gelagert ist. Beispielsweise kann das Getriebebauteil ein Außenring oder ein Innenring eines Wälz- oder Gleitlagers sein. Das Wälzlager kann insbesondere ein Kugellager, ein doppelreihiges Wälzlager oder ein Kreuzrollenlager sein.

Das erfindungsgemäße Getriebe kann beispielsweise ein Planetengetriebe oder ein Zykloidgetriebe sein.

Insbesondere kann das erfindungsgemäße Getriebe ein Spannungswellengetriebe sein. Bei einer solchen Ausführung kann das Getriebebauteil vorteilhaft ein Circularspline oder ein Dynamicspline oder ein Flexspline oder ein Wellengeneratoreinsatz sein.

In ganz besonders vorteilhafter Weise kann das Getriebe als ein Dreiwellengetriebe ausgebildet sein, bei dem eine rotierbar gelagerte erste Welle als Getriebeantrieb fungiert, eine rotierbar gelagerte zweite Welle als Getriebeabtrieb fungiert und eine dritte Welle, insbesondere relativ zu dem Getriebegehäuse, drehfest gehalten ist.

Ganz besonders vorteilhaft ist eine Ausführung, bei der die Anzahl der Verbinder ohne strukturelle Veränderung des ersten Getriebebauteilelements und/oder des zweiten Getriebebauteilelements, insbesondere werkzeugfrei, veränderbar ist. Eine solche Ausführung hat den ganz besonderen Vorteil, dass das erste Getriebebauteilelement und das zweite Getriebebauteilelement bei der Herstellung des Getriebes mit einer höheren Anzahl von Verbindern miteinander verbunden werden können, wenn eine höhere Drehsteifigkeit des ersten Getriebebauteilelements relativ zu dem zweiten Getriebebauteilelement gewünscht ist, und dass alternativ das erste Getriebebauteilelement und das zweite Getriebebauteilelement mit einer niedrigeren Anzahl von Verbindern miteinander verbunden werden, wenn eine niedrigere Drehsteifigkeit des ersten Getriebebauteilelements relativ zu dem zweiten Getriebebauteilelement gewünscht ist. Auf diese Weise sind ganz effizient Getriebe mit unterschiedlichen Eigenschaften herstellbar.

Insbesondere hierfür kann vorteilhaft vorgesehen sein, dass das Getriebe mehrere gleich ausgebildete Verbinder aufweist, oder dass das Getriebe zumindest mehrere hinsichtlich Größe und Form gleich ausgebildete Verbinder aufweist. Es ist vorteilhaft insbesondere möglich, dass das Getriebe mehrere hinsichtlich Größe und Form gleich ausgebildete Verbinder aufweist, von denen sich jedoch mindestens zwei hinsichtlich des Vorhandenseins oder der Art des Sensors und/oder hinsichtlich ihrer Verformungseigenschaften, insbesondere hinsichtlich ihrer Elastizität, voneinander unterscheiden. Die Gleichheit von Größe und Form ermöglicht es, individuell Verbinder mit unterschiedlichen Eigenschaften und/oder Sensoren zu verwenden, ohne eine strukturelle Veränderung des ersten Getriebebauteilelements und/oder des zweiten Getriebebauteilelements vornehmen zu müssen.

Unter der Formulierung "*ohne strukturelle* Veränderung" ist insbesondere zu verstehen, dass die Getriebebauteilelemente nach einer Änderung der Anzahl und/oder der Anordnung und/oder der Art der Verbinder ihre ursprüngliche Form, Oberfläche, Materialeigenschaften und Funktionalität vollständig beibehalten haben und insbesondere keine plastischen Verformungen, Risse oder Veränderungen der Gefügestruktur aufweisen.

Es ist vorteilhaft insbesondere möglich, dass das Getriebe mehrere hinsichtlich Größe und Form und Anordnung der Befestigungsabschnitte gleich ausgebildete Verbinder aufweist, von denen sich jedoch mindestens zwei hinsichtlich des Vorhandenseins oder der Art des Sensors und/oder hinsichtlich ihrer Verformungseigenschaften, insbesondere hinsichtlich ihrer Elastizität, voneinander unterscheiden. Die Gleichheit von Größe und Form und Anordnung der Befestigungsabschnitte ermöglicht es, individuell Verbinder mit unterschiedlichen Eigenschaften und/oder Sensoren zu verwenden, ohne eine strukturelle Veränderung des ersten Getriebebauteilelements und/oder des zweiten Getriebebauteilelements vornehmen zu müssen.

Ganz besonders vorteilhaft ist ein Aktuator, der einen Antriebsmotor und ein erfindungsgemäßes Getriebe, das dem Antriebsmotor triebtechnisch nachgeschaltet ist, aufweist.

Insbesondere kann der Aktuator eine Steuerungsvorrichtung aufweisen, die Sensorsignale von dem Getriebe, insbesondere von den als Sensoren ausgebildeten Verbindern, empfängt.

Bei einer ganz besonders vorteilhaften Ausführung ist die Steuerungsvorrichtung dazu ausgebildet, den Antriebsmotor in Abhängigkeit von dem Sensormesswert zu steuern oder zu regeln. Insbesondere kann die Steuerungsvorrichtung dazu ausgebildet sein, den Antriebsmotor zu drosseln und/oder anzuhalten, wenn ein vorgegebener oder vorgebbarer Sensormesswert überschritten wird oder wenn ein vorgegebener oder vorgebbarer Sensormesswert unterschritten wird oder wenn ein vorgegebener oder vorgebbarer Sensormesswertbereich verlassen wird. Auf diese Weise kann eine Überlastung des Getriebes vermieden werden.

Von ganz besonderem Vorteil ist ein Roboter, insbesondere ein Industrieroboter, der wenigstens ein erfindungsgemäßes Getriebe oder einen erfindungsgemäßen Aktuator beinhaltet. Insbesondere kann das erfindungsgemäße Getriebe in einem Robotergelenk eingesetzt werden. Das Robotergelenk kann durch die Verwendung des erfindungsgemäßen Getriebes besonders vielseitig verwendet und überwacht werden.

Von ganz besonderem Vorteil ist ein Fahrwerk, insbesondere ein aktives Fahrwerk, für ein Kraftfahrzeug, das wenigstens ein erfindungsgemäßes Getriebe oder einen erfindungsgemäßen Aktuator aufweist. Ein ganz besonderer Vorteil ist es hierbei, dass ein hoher Überlastungsschutz und eine zuverlässige Überwachung des Getriebes einfach realisierbar ist, was die Fahrsicherheit erhöht. Von ganz besonderem Vorteil ist eine Lenkung, insbesondere PKW-Lenkung oder LKW-Lenkung, die wenigstens ein erfindungsgemäßes Getriebe aufweist. Die Lenkung kann insbesondere eine Servolenkung und/oder eine Überlagerungslenkung sein.

Ganz besonders vorteilhaft ist ein Verfahren zum Herstellen erfindungsgemäßer Getriebe, das folgende Schritte beinhaltet:
a. Bereitstellen einer Vielzahl von gleichen ersten Getriebebauteilelementen und gleichen zweiten Getriebebauteilelementen, die jeweils mittels wenigstens eines Verbinders, der an dem ersten Getriebebauteilelement und/oder an dem zweiten Getriebebauteilelement befestigbar ist, elastisch beweglich zum Bilden eines Getriebebauteils, welches ein Drehmoment überträgt oder ein Drehmoment abstützt, miteinander verbindbar sind,
b. Bereitstellen einer Vielzahl von ersten Verbindern, die einen Sensor aufweisen oder als Sensor ausgebildet sind, und
c. Bereitstellen einer Vielzahl von ersten Verbindern, die keinen Sensor aufweisen und nicht als Sensor ausgebildet sind,
d. Zusammenfügen von jeweils einem der bereitgestellten ersten Getriebebauteilelemente und einem der bereitgestellten zweiten Getriebebauteilelemente mittels wenigstens eines ersten Verbinders, um ein Getriebe mit Sensorik herzustellen, und
e. Zusammenfügen von jeweils einem der bereitgestellten ersten Getriebebauteilelemente und einem der bereitgestellten zweiten Getriebebauteilelemente mittels wenigstens eines zweiten Verbinders, um ein Getriebe ohne Sensorik herzustellen.

Natürlich müssen zusätzlich zu den oben genannten Schritten jeweils auch die übrigen Bauteile des Getriebes eingebaut werden, um im Ergebnis ein funktionsfähiges Getriebe zu erhalten.

Insbesondere kann bei der Herstellung eines erfindungsgemäßen Getriebes, wie bereits erwähnt, vorteilhaft vorgesehen sein, dass die ersten Getriebebauteilelemente und die zweiten Getriebebauteilelemente mit einer höheren Anzahl von Verbindern miteinander verbunden werden, wenn eine höhere Drehsteifigkeit des ersten Getriebebauteilelements relativ zu dem zweiten Getriebebauteilelement gewünscht ist, und dass die ersten Getriebebauteilelemente und die zweiten Getriebebauteilelemente mit einer niedrigeren Anzahl von Verbindern miteinander verbunden werden, wenn eine niedrigere Drehsteifigkeit des ersten Getriebebauteilelements relativ zu dem zweiten Getriebebauteilelement gewünscht ist.

Alternativ oder zusätzlich kann vorteilhaft vorgesehen sein, dass zum Verbinden der ersten Getriebebauteilelemente und der zweiten Getriebebauteilelemente jeweils hinsichtlich Größe und Form gleich ausgebildete, Verbinder verwendet werden, oder dass zum Verbinden der ersten Getriebebauteilelemente und der zweiten Getriebebauteilelemente jeweils hinsichtlich Größe und Form gleich ausgebildete Verbinder verwendet werden, von denen sich jedoch wenigstens zwei hinsichtlich des Vorhandenseins oder der Art des Sensors und/oder hinsichtlich ihrer Verformungseigenschaften, insbesondere hinsichtlich ihrer Elastizität, voneinander unterscheiden.

Ganz allgemein ist eine Vorrichtung, insb. ein Getriebe, bzw. ein Verfahren besonders vorteilhaft, das (insbesondere auch in Kombination mit wenigstens einem der vorstehend genannten Aspekte) wenigstens einen der folgenden Aspekte aufweist:
1. Getriebe mit einem Getriebegehäuse (25) und mit einem von dem Getriebegehäuse (25) verschiedenen Getriebebauteil (1), welches ein Drehmoment überträgt oder ein Drehmoment abstützt, dadurch gekennzeichnet, dass das Getriebebauteil (1) ein erstes Getriebebauteilelement (3) und ein zweites Getriebebauteilelement (4) aufweist, die mittels wenigstens eines Verbinders (5), der an dem ersten Getriebebauteilelement (3) und/oder an dem zweiten Getriebebauteilelement (4) befestigt ist, elastisch beweglich, insbesondere relativ zueinander drehbar, miteinander verbunden sind.
2. Getriebe nach Aspekt 1, dadurch gekennzeichnet, dass
   a. der Verbinder (5) mit dem ersten Getriebebauteilelement (3) gemeinsam einstückig hergestellt ist und einen Befestigungsabschnitt aufweist, mittels dem er an dem zweiten Getriebebauteilelement (4) befestigt ist, oder dass
   b. der Verbinder (5) mit dem zweiten Getriebebauteilelement (4) gemeinsam einstückig hergestellt ist und einen Befestigungsabschnitt aufweist, mittels dem er an dem ersten Getriebebauteilelement (3) befestigt ist.
3. Getriebe nach Aspekt 1 oder 2, dadurch gekennzeichnet, dass die Befestigung des Verbinders (5) mit dem ersten Getriebebauteilelement (3) und/oder dem zweiten Getriebebauteilelement (4) eine kraftschlüssige Verbindung aufweist oder als ausschließlich kraftschlüssige Verbindung ausgebildet ist.
4. Getriebe nach einem der Aspekte 1 bis 3, dadurch gekennzeichnet, dass die Befestigung des Verbinders (5) mit dem ersten Getriebebauteilelement (3) und/oder dem zweiten Getriebebauteilelement (4) eine formschlüssige Verbindung aufweist oder als ausschließlich formschlüssige Verbindung ausgebildet ist.
5. Getriebe nach einem der Aspekte 1 bis 4, dadurch gekennzeichnet, dass die Befestigung des Verbinders (5) mit dem ersten Getriebebauteilelement (3) und/oder dem zweiten Getriebebauteilelement (4) zerstörungsfrei lösbar ausgebildet ist.
6. Getriebe nach einem der Aspekte 1 bis 5, dadurch gekennzeichnet, dass die Befestigung des Verbinders (5) mit dem ersten Getriebebauteilelement (3) und/oder dem zweiten Getriebebauteilelement (4) eine stoffschlüssige Verbindung aufweist oder als ausschließlich stoffschlüssige Verbindung ausgebildet ist.
7. Getriebe nach einem der Aspekte 2 bis 6, dadurch gekennzeichnet, dass der Befestigungsabschnitt als Steckabschnitt (13) ausgebildet ist oder einen Steckabschnitt (13) aufweist, der, insbesondere passgenau, in eine Steckausnehmung (14) des Getriebebauteilelements (3, 4) eingreift.
8. Getriebe nach Aspekt 7, dadurch gekennzeichnet, dass der Steckabschnitt (13) axial oder radial in die Steckausnehmung (14) des Getriebebauteilelements (3, 4) eingreift.
9. Getriebe nach einem der Aspekte 1 bis 8, dadurch gekennzeichnet, dass der Verbinder (5) wenigstens einen Druckabschnitt, insbesondere einen Druckstab, aufweist, der durch das Drehmoment auf Druck belastet wird.
10. Getriebe nach einem der Aspekte 1 bis 9, dadurch gekennzeichnet, dass der Verbinder (5) wenigstens einen Zugabschnitt, insbesondere einen Zugstab, aufweist, der durch das Drehmoment auf Zug belastet wird.
11. Getriebe nach einem der Aspekte 1 bis 10, dadurch gekennzeichnet, dass der Verbinder (5) einen u-förmigen Querschnitt oder einen s-förmigen Querschnitt oder einen x-förmigen Querschnitt oder einen v-förmigen Querschnitt aufweist.
12. Getriebe nach den Aspekten 10 und 11, dadurch gekennzeichnet, dass, insbesondere je nach Vorzeichen des Drehmomentes, wenigstens ein Schenkel des Verbinders (5) der Zugabschnitt und ein weiterer Schenkel des Verbinders (5) der Druckabschnitt ist.
13. Getriebe nach einem der Aspekte 1 bis 12, dadurch gekennzeichnet, dass der Verbinder (5) als Sensor ausgebildet ist oder Teil eines Sensors ist.
14. Getriebe nach Aspekt 13, dadurch gekennzeichnet, dass der Sensor als Temperatursensor ausgebildet ist.
15. Getriebe nach Aspekt 13, dadurch gekennzeichnet, dass der Sensor als Vibrationssensor ausgebildet ist.
16. Getriebe nach Aspekt 13, dadurch gekennzeichnet, dass der Sensor als Verformungssensor ausgebildet ist.
17. Getriebe nach Aspekt 13, dadurch gekennzeichnet, dass der Sensor wenigstens einen Dehnungsmesstreifen (16) aufweist.
18. Getriebe nach Aspekt 16 oder 17, dadurch gekennzeichnet, dass der Verbinder (5) einen elastisch verformbaren Verformungsabschnitt (15) aufweist.
19. Getriebe nach den Aspekten 17 und 18, dadurch gekennzeichnet, dass der wenigstens eine Dehnungsmesstreifen (16) dazu ausgebildet und angeordnet ist, eine Verformung des Verformungsabschnittes (15) zu erfassen.
20. Getriebe nach einem der Aspekte 1 bis 19, dadurch gekennzeichnet, dass mehrere Verbinder (5) derart angeordnet sind, dass die Abstände unmittelbar benachbarter Verbinder (5) gleich sind.
21. Getriebe nach Aspekt 20, dadurch gekennzeichnet, dass die Abstände aller unmittelbar benachbarter Verbinder (5) gleich sind.
22. Getriebe nach einem der Aspekte 1 bis 20, dadurch gekennzeichnet, dass mehrere Verbinder (5) derart angeordnet sind, dass die Abstände unmittelbar benachbarter Verbinder (5) ungleich sind.
23. Getriebe nach einem der Aspekte 1 bis 22, dadurch gekennzeichnet, dass der wenigstens eine Verbinder (5) dazu ausgebildet ist zu brechen und/oder die Befestigung des Verbinders (5) mit dem Getriebebauteilelement (3, 4) dazu ausgebildet ist sich zu lösen, wenn das Drehmoment einen vorgegebenen Wert übersteigt.
24. Getriebe nach einem der Aspekte 1 bis 23, dadurch gekennzeichnet, dass das Getriebebauteil (1) und/oder das erste Getriebebauteilelement (3) und/oder das zweite Getriebebauteilelement (4) ringförmig ausgebildet sind.
25. Getriebe nach einem der Aspekte 1 bis 24, dadurch gekennzeichnet, dass das Getriebebauteil (1) eine Verzahnung aufweist und/oder das erste Getriebebauteilelement (3) eine Verzahnung aufweist und/oder das zweite Getriebebauteilelement (4) eine Verzahnung aufweist.
26. Getriebe nach einem der Aspekte 1 bis 25, dadurch gekennzeichnet, dass das Getriebebauteil (1) Teil eines Lagers ist, mittels dem eine Getriebewelle rotierbar gelagert ist.
27. Getriebe nach einem der Aspekte 1 bis 26, dadurch gekennzeichnet, dass das Getriebe ein Planetengetriebe oder ein Zykloidgetriebe ist.
28. Getriebe nach einem der Aspekte 1 bis 26, dadurch gekennzeichnet, dass das Getriebe ein Spannungswellengetriebe ist.
29. Getriebe nach Aspekt 28, dadurch gekennzeichnet, dass das Getriebebauteil (1) ein Circularspline (2) oder ein Dynamicspline oder ein Flexspline (6) oder ein Wellengeneratoreinsatz ist.
30. Getriebe nach einem der Aspekte 1 bis 29, dadurch gekennzeichnet, dass das Getriebe als ein Dreiwellengetriebe ausgebildet ist, bei dem eine rotierbar gelagerte erste Welle als Getriebeantrieb, eine rotierbar gelagerte zweite Welle als Getriebeabtrieb und eine dritte Welle, insbesondere relativ zu dem Getriebegehäuse, drehfest gehalten ist.
31. Getriebe nach einem der Aspekte 1 bis 30, dadurch gekennzeichnet, dass die Anzahl der Verbinder (5) ohne strukturelle Veränderung ersten Getriebebauteilelements (3) und/oder des zweiten Getriebebauteilelements (4), insbesondere werkzeugfrei, veränderbar ist.
32. Getriebe nach einem der Aspekte 1 bis 31, dadurch gekennzeichnet, dass
   a. das Getriebe mehrere gleich ausgebildete Verbinder (5) aufweist, oder dass
   b. das Getriebe mehrere hinsichtlich Größe und Form gleich ausgebildete Verbinder (5) aufweist, oder dass
   c. das Getriebe mehrere hinsichtlich Größe und Form gleich ausgebildete Verbinder (5) aufweist, von denen sich jedoch wenigstens zwei hinsichtlich des Vorhandenseins oder der Art des Sensors und/oder hinsichtlich ihrer Verformungseigenschaften, insbesondere hinsichtlich ihrer Elastizität, voneinander unterscheiden.
33. Aktuator beinhaltend einen Antriebsmotor und ein Getriebe nach einem der Aspekte 1 bis 32, das dem Antriebsmotor triebtechnisch nachgeschaltet ist.
34. Aktuator nach Aspekt 33, dadurch gekennzeichnet, dass eine Steuerungsvorrichtung vorhanden ist, die Sensorsignale von dem Getriebe empfängt.
35. Aktuator nach Aspekt 34, dadurch gekennzeichnet, dass die Steuerungsvorrichtung dazu ausgebildet ist, den Antriebsmotor in Abhängigkeit von dem Sensormesswert zu steuern oder zu regeln.
36. Aktuator nach Aspekt 34 oder 35, dadurch gekennzeichnet, dass die Steuerungsvorrichtung dazu ausgebildet ist, den Antriebsmotor zu drosseln und/oder anzuhalten, wenn ein vorgegebener oder vorgebbarer Sensormesswert überschritten wird oder wenn ein vorgegebener oder vorgebbarer Sensormesswert unterschritten wird oder wenn ein vorgegebener oder vorgebbarer Sensormesswertbereich verlassen wird.
37. Robotergelenk, welches wenigstens ein Getriebe nach einem der Aspekte 1 bis 32 und/oder einen Aktuator nach einem der Aspekte 33 bis 36 aufweist.
38. Roboter, der wenigstens ein Getriebe nach einem der Aspekte 1 bis 32 und/oder einen Aktuator nach einem der Aspekte 33 bis 36 aufweist.
39. Fahrwerk, insbesondere aktives Fahrwerk für ein Kraftfahrzeug, welches wenigstens ein nach einem der Aspekte 1 bis 32 und/oder einen Aktuator nach einem der Aspekte 33 bis 36 aufweist.
40. Lenkung, insbesondere PKW-Lenkung oder LKW-Lenkung, die wenigstens ein Getriebe nach einem der Aspekte 1 bis 32 und/oder einen Aktuator nach einem der Aspekte 33 bis 36 aufweist.
41. Lenkung nach Aspekt 40, dadurch gekennzeichnet, dass die Lenkung eine Servolenkung und/oder eine Überlagerungslenkung ist.
42. Verfahren zum Herstellen von Getrieben nach einem der Aspekte 1 bis 32, beinhaltend folgende Schritte:
   a. Bereitstellen einer Vielzahl von gleichen ersten Getriebebauteilelementen (3) und gleichen zweiten Getriebebauteilelementen (4), die jeweils mittels wenigstens eines Verbinders (5), der an dem ersten Getriebebauteilelement (3) und/oder an dem zweiten Getriebebauteilelement befestigbar ist, elastisch beweglich zum Bilden eines Getriebebauteils, welches ein Drehmoment überträgt oder ein Drehmoment abstützt, miteinander verbindbar sind,
   b. Bereitstellen einer Vielzahl von ersten Verbindern (5), die einen Sensor aufweisen oder als Sensor ausgebildet sind, und
   c. Bereitstellen einer Vielzahl von ersten Verbindern (5), die keinen Sensor aufweisen und nicht als Sensor ausgebildet sind,
   d. Zusammenfügen von jeweils einem der bereitgestellten ersten Getriebebauteilelemente (3) und einem der bereitgestellten zweiten Getriebebauteilelemente (4) mittels wenigstens eines ersten Verbinders (5), um ein Getriebe mit Sensorik herzustellen, und
   e. Zusammenfügen von jeweils einem der bereitgestellten ersten Getriebebauteilelemente (3) und einem der bereitgestellten zweiten Getriebebauteilelemente (4) mittels wenigstens eines zweiten Verbinders (5), um ein Getriebe ohne Sensorik herzustellen.
43. Verfahren nach Aspekt 42, dadurch gekennzeichnet, dass die ersten Getriebebauteilelemente (3) und die zweiten Getriebebauteilelemente (4) mit einer höheren Anzahl von Verbindern miteinander verbunden werden, wenn eine höhere Drehsteifigkeit des ersten Getriebebauteilelements (3) relativ zu dem zweiten Getriebebauteilelement (4) gewünscht ist, und dass die ersten Getriebebauteilelemente (3) und die zweiten Getriebebauteilelemente (4) mit einer niedrigeren Anzahl von Verbindern miteinander verbunden werden, wenn eine niedrigere Drehsteifigkeit des ersten Getriebebauteilelements (3) relativ zu dem zweiten Getriebebauteilelement (4) gewünscht ist.
44. Verfahren nach Aspekt 42 oder 43, dadurch gekennzeichnet, dass
   a. zum Verbinden der ersten Getriebebauteilelemente (3) und der zweiten Getriebebauteilelemente (4) jeweils hinsichtlich Größe und Form gleich ausgebildete, Verbinder (5) verwendet werden, oder dass
   b. zum Verbinden der ersten Getriebebauteilelemente (3) und der zweiten Getriebebauteilelemente (4) jeweils hinsichtlich Größe und Form gleich ausgebildete Verbinder (5) verwendet werden, von denen sich jedoch mindestens zwei hinsichtlich des Vorhandenseins oder der Art des Sensors und/oder hinsichtlich ihrer Verformungseigenschaften, insbesondere hinsichtlich ihrer Elastizität, voneinander unterscheiden.

In der Zeichnung ist der Erfindungsgegenstand beispielhaft und schematisch dargestellt und wird anhand der Figuren nachfolgend beschrieben, wobei gleiche oder gleich wirkende Elemente auch in unterschiedlichen Ausführungsbeispielen zumeist mit denselben Bezugszeichen versehen sind. Dabei zeigen:
- Fig. 1: ein erstes Ausführungsbeispiel eines erfindungsgemäßen Getriebes,
- Fig. 2: eine Detailansicht ersten Ausführungsbeispiels mit einer Blickrichtung entlang der Mittelachse, wobei das Getriebegehäuse 25 und die Getriebeabtriebswelle nicht dargestellt sind,
- Fig. 3: das Getriebebauteil des ersten Ausführungsbeispiels,
- Fig. 4: die Rückansicht eines der Verbinder für ein erfindungsgemäßes Getriebe gemäß dem ersten Ausführungsbeispiel,
- Fig. 5: die Vorderansicht eines der Verbinder für ein erfindungsgemäßes Getriebe gemäß dem ersten Ausführungsbeispiel,
- Fig. 6: eine Seitenansicht eines der Verbinder für ein erfindungsgemäßes Getriebe gemäß dem ersten Ausführungsbeispiel,
- Fig. 7: eine schematische Darstellung der Kräfteverteilung eines der Verbinder für ein erfindungsgemäßes Getriebe gemäß dem ersten Ausführungsbeispiel,
- Fig. 8: ein zweites Ausführungsbeispiel eines erfindungsgemäßen Getriebes,
- Fig. 9: die Rückansicht eines zweiten Ausführungsbeispiels eines Verbinders für ein erfindungsgemäßes Getriebe,
- Fig. 10: die Vorderansicht des zweiten Ausführungsbeispiels eines Verbinders für ein erfindungsgemäßes Getriebe,
- Fig. 11: eine Seitenansicht des zweiten Ausführungsbeispiels eines Verbinders für ein erfindungsgemäßes Getriebe,
- Fig. 12: ein drittes Ausführungsbeispiel eines erfindungsgemäßen Getriebes,
- Fig. 13: eine perspektivische Detailansicht eines der Verbinder des dritten Ausführungsbeispiels eines erfindungsgemäßen Getriebes, und
- Fig. 14: ein viertes Ausführungsbeispiel eines erfindungsgemäßen Getriebes.

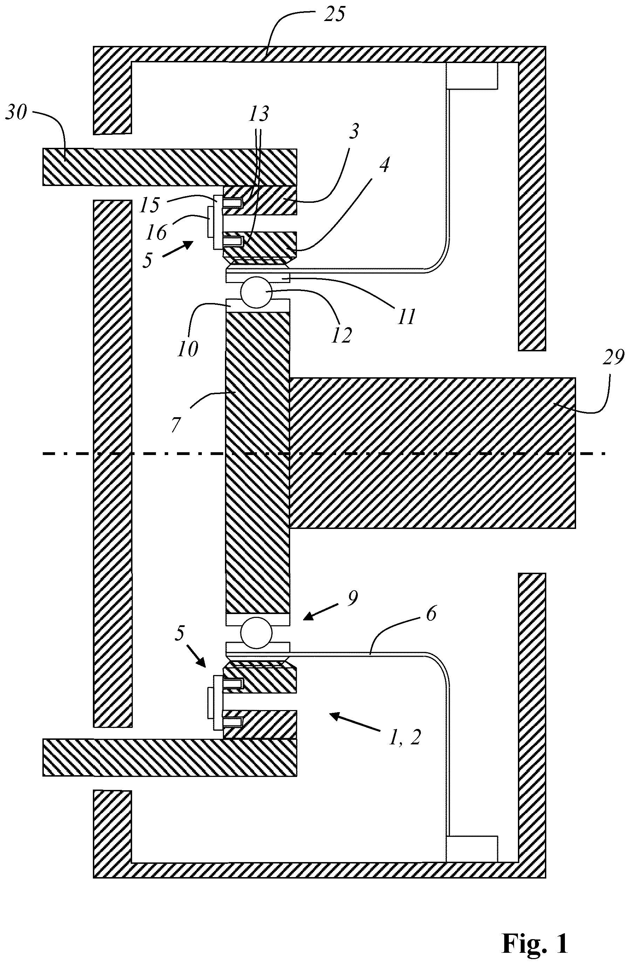

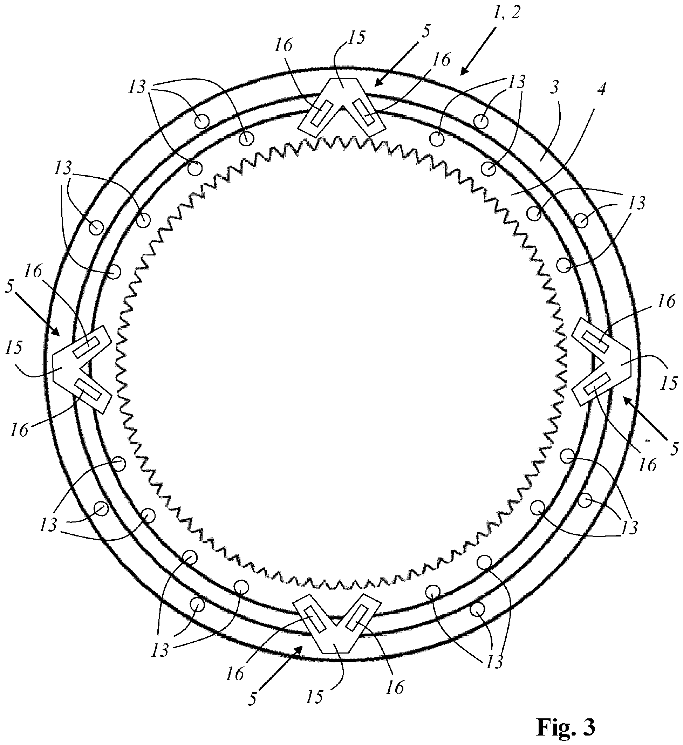

Figur 1 zeigt ein erstes Ausführungsbeispiel eines erfindungsgemäßen Getriebes, das als Spannungswellengetriebe ausgebildet ist. Das Spannungswellengetriebe hat ein Getriebegehäuse 25 und ein Getriebebauteil 1, nämlich einen Circularspline 2, welches ein Drehmoment überträgt oder ein Drehmoment abstützt. Das Getriebebauteil 1 (Circularspline 2) ist in Figur 3 separat dargestellt. Der Circularspline 2 ist mit einer Getriebeabtriebswelle 30 drehfest verbunden, die als Hohlwelle ausgebildet ist.

Das Getriebebauteil 1 weist ein erstes Getriebebauteilelement 3 und ein zweites Getriebebauteilelement 4 auf, die mittels vier Verbindern 5, die jeweils an dem ersten Getriebebauteilelement 3 und an dem zweiten Getriebebauteilelement 4 befestigt sind, elastisch beweglich miteinander verbunden sind. Das erste Getriebebauteilelement 3 ist als Ring ausgebildet und weist mehrere axiale Bohrungen auf, die als Steckausnehmungen 13 für Steckabschnitte 14 der Verbinder 5 ausgebildet sind. Das zweite Getriebebauteilelement 4 ist als innenverzahnter Ring ausgebildet und weist ebenfalls mehrere axiale Bohrungen auf, die als Steckausnehmungen 13 für Steckabschnitte 14 der Verbinder 5 ausgebildet sind.

Das Spannungswellengetriebe weist außerdem einen radialflexiblen außenverzahnten hutförmigen Flexspline 6 auf, der drehfest mit dem Getriebegehäuse 25 verbunden ist und in dem von einem Circularspline 2 umgebenen Raumvolumen angeordnet ist. Innerhalb des Flexsplines 6 ist ein ovaler Wellengeneratoreinsatz 7 rotierbar angeordnet, dessen Außenumfang 8 einen Lagersitz für ein radialflexibles Wälzlager 9 aufweist, das einen Innenring 10, einen Außenring 11 und Wälzkörper 12 hat. Der Wellengeneratoreinsatz 7 ist mit einer Getriebeantriebswelle 29 drehfest verbunden. Über das radialflexible Wälzlager 9 steht der Wellengeneratoreinsatz 7 mit dem radialflexiblen Flexspline 6 in Kontakt. Das radialflexible Wälzlager 9 ermöglicht es, den Wellengeneratoreinsatz 7 relativ zu dem Circularspline 2 rotieren zu können. Der Wellengeneratoreinsatz 7 biegt das Wälzlager 9 und den Flexspline 6 zu einer ovalen Form, um die Verzahnungen des Circularsplines 2 und des Flexsplines 6 in der Hochachse des ovalen Wellengeneratoreinsatzes 7 miteinander in Eingriff zu bringen.

Beispielsweise kann das Getriebe außer dem Drehmomentsensor weitere (nicht dargestellte) Sensoren aufweisen, beispielsweise einen (nicht dargestellten) Temperatursensor und/oder einen (nicht dargestellten) Vibrationssensor. Die weiteren Sensoren können jeweils an einem der Verbinder angeordnet sein.

Die Verbinder 5 sind derart ausgebildet, dass ein Drehmoment zu einer ausschließlich reinen Zug-, Druck- oder Schubbeanspruchung der Schenkel jedes Verbinders 5 führen. Dies hat den besonderen Vorteil, dass die Verbinder 5 besonders kompakt ausgeführt sein können und somit einen geringen Bauraumbedarf haben. Zudem erlaubt dies eine einfache theoretische Modellbildung und eine verbesserte Verringerung von Störgrößen.

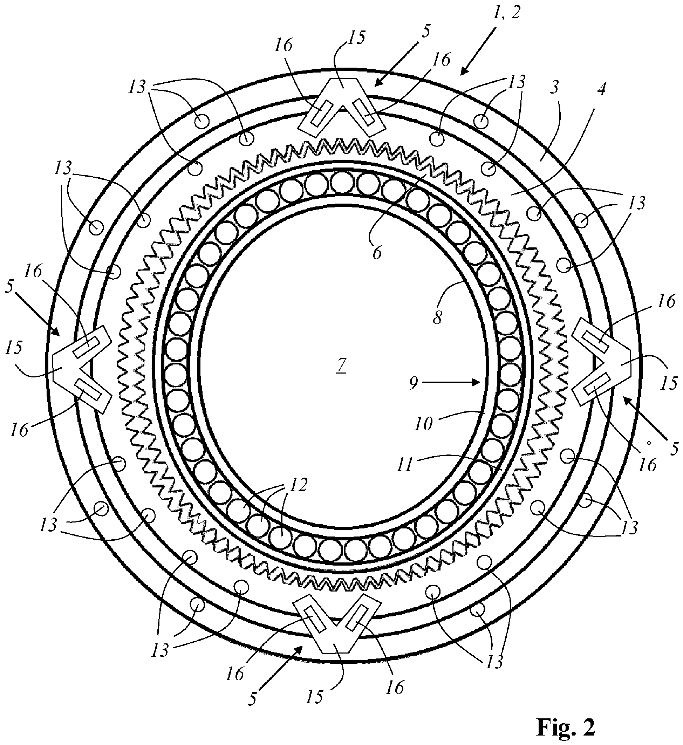

Figur 2 zeigt eine Detailansicht des Spannungswellengetriebes mit einer Blickrichtung entlang der Mittelachse, wobei das Getriebegehäuse 25 und die Getriebeabtriebswelle der besseren Übersichtlichkeit halber nicht dargestellt sind.

Figur 3 zeigt das Getriebebauteil 1 des Spannungswellengetriebes.

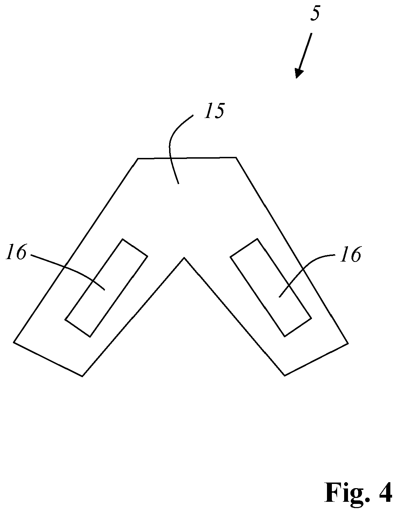

Die Figuren 4 bis 6 zeigen verschiedene Ansichten eines der Verbinder 5 des in Figur 1 dargestellten erfindungsgemäßen Getriebes gemäß dem ersten Ausführungsbeispiel. Die Figur 4 zeigt die Rückansicht eines der Verbinder. Es ist in dieser Figur zu erkennen, dass der Verbinder 5 einen v-förmig ausgebildeten Verformungsabschnitt 15 aufweist, der beispielsweise aus einem ausgestanzten Blech hergestellt sein kann. Auf jeden Schenkel des v-förmig ausgebildeten Verformungsabschnitts 15 ist rückseitig jeweils ein Dehnungsmessstreifen 16 angeklebt, der es ermöglicht, die auf die Schenkel des v-förmig ausgebildeten Verformungsabschnitts 15 einwirkenden Zug- bzw. Druckkräfte zu messen.

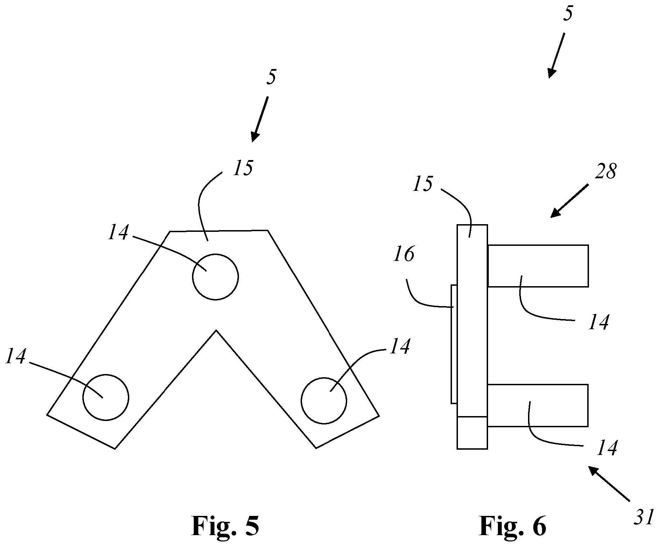

An dem v-förmig ausgebildeten Verformungsabschnitt 15 sind vorderseitige hervorstehende Steckabschnitte 14, die als Steckbolzen ausgebildet sind, angeordnet, die in die Steckausnehmungen 13 des Getriebebauteils 1 eingesteckt werden können, was in den Figuren 5 und 6 gut zu erkennen ist.

Der Verbinder 5 weist einen ersten Befestigungsabschnitt 28 auf, mittels dem er an dem ersten Getriebebauteilelement 3 befestigt wird. Der Verbinder 5 weist außerdem einen zweiten Befestigungsabschnitt 31 auf, mittels dem er an dem zweiten Getriebebauteilelement 4 befestigt wird.

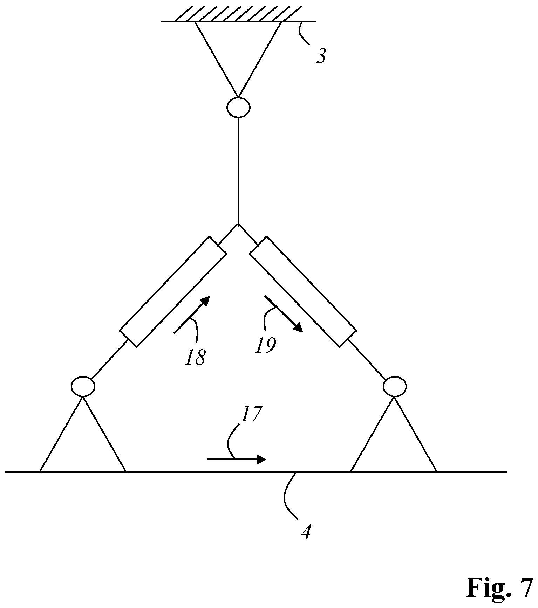

Figur 7 zeigt eine schematische Darstellung der Kräfteverteilung eines der Verbinder 5 für ein erfindungsgemäßes Getriebe gemäß dem ersten Ausführungsbeispiel, wobei beispielhaft das erste Getriebebauteilelement 3 als drehfest gehalten angenommen wird und angenommen wird, dass auf das zweite Getriebebauteilelement 4 eine Kraft 17 einwirkt. Die Kraft 17 bewirkt, dass ein Schenkel des v-förmig ausgebildeten Verformungsabschnitts 15 mit einer Kraft 18 auf Druck belastet wird (in der Figur 7 links) und dass der andere Schenkel des v-förmig ausgebildeten Verformungsabschnitts 15 mit einer Kraft 19 auf Zug belastet wird.

Durch die Messung der Kräfte 18 und 19 kann auf das über das Getriebebauteil 1 übertragene bzw. abgestützte Drehmoment geschlossen werden.

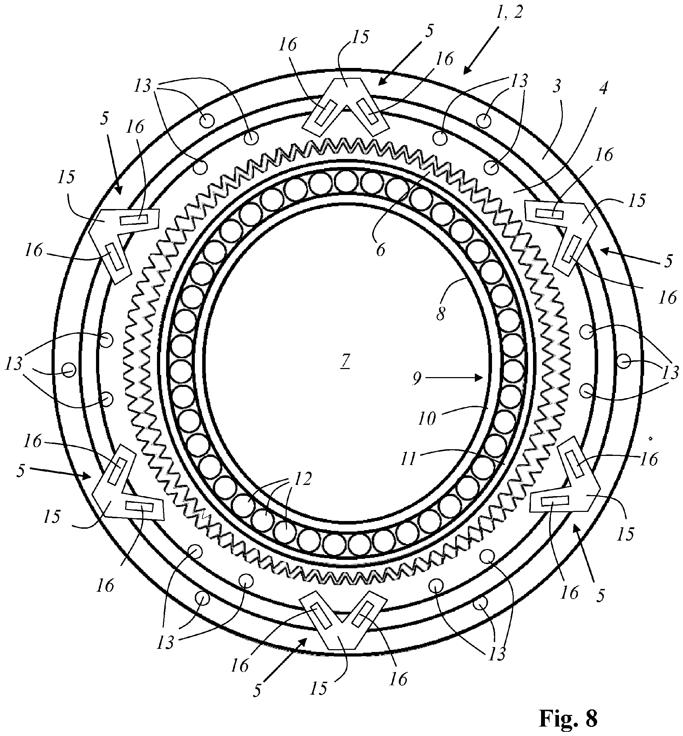

Figur 8 zeigt zweites Ausführungsbeispiel eines erfindungsgemäßen Getriebes, das im Wesentlichen dem ersten Ausführungsbeispiel entspricht, wobei jedoch im Unterscheid zu dem ersten Ausführungsbeispiel insgesamt sechs der Verbinder 5 vorhanden sind. Das Getriebebauteil 1 (Circularspline 2) ist daher bei dem zweiten Ausführungsbeispiel weniger torsionselastisch ausgebildet als bei dem ersten Ausführungsbeispiel.

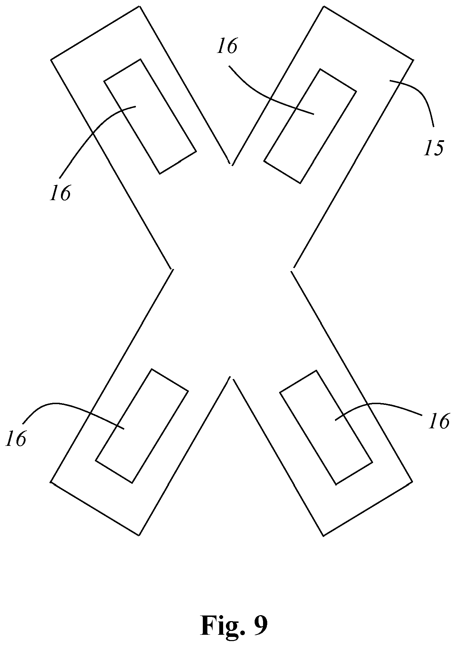

Die Figuren 9 bis 11 zeigen verschiedene Ansichten eines zweiten Ausführungsbeispiels eines Verbinders 5 für ein erfindungsgemäßes Getriebe. Die Figur 9 zeigt die Rückansicht des Verbinders. Es ist in dieser Figur zu erkennen, dass der Verbinder 5 einen x-förmig ausgebildeten Verformungsabschnitt 15 aufweist, der beispielsweise aus einem ausgestanzten Blech hergestellt sein kann. An jeden Schenkel des x-förmig ausgebildeten Verformungsabschnitts 15 ist rückseitig jeweils ein Dehnungsmessstreifen 16 angeklebt, der es ermöglicht, die auf die Schenkel des x-förmig ausgebildeten Verformungsabschnitts 15 einwirkenden Zug- bzw. Druckkräfte zu messen.

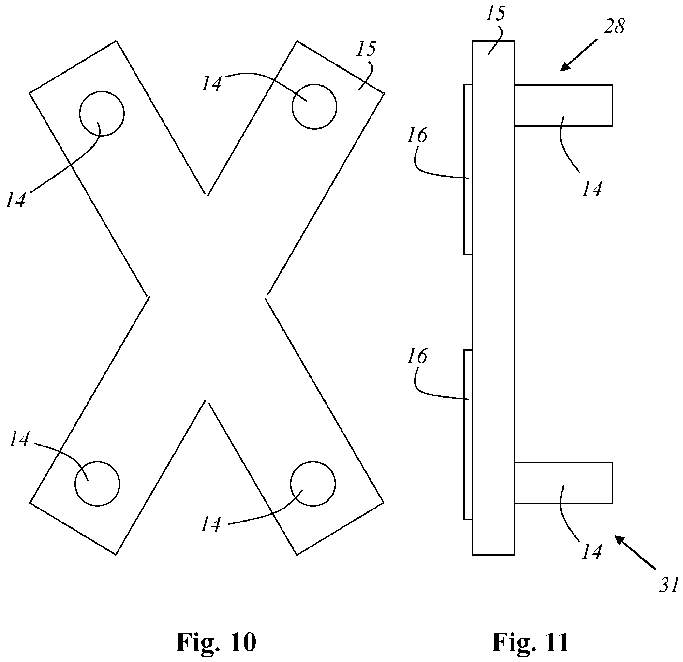

An dem x-förmig ausgebildeten Verformungsabschnitt 15 sind vorderseitige hervorstehende Steckabschnitte 14, die als Steckbolzen ausgebildet sind, angeordnet, die in Steckausnehmungen 13 des Getriebebauteils 1 eingesteckt werden können, was in den Figuren 10 und 11 gut zu erkennen ist.

Das erste Getriebebauteilelement 3 und das zweite Getriebebauteilelement 4 werden mit Steckausnehmungen 13 derart versehen, dass die Steckabschnitte 14 der Verbinder 5 zum Zwecke der Befestigung eingesteckt werden können, wobei die Anzahl und die Anordnung der Steckausnehmungen 13 vorzugsweise derart gewählt ist, dass die Verwendung von unterschiedlichen Anzahlen von Verbindern 5 ermöglicht ist.

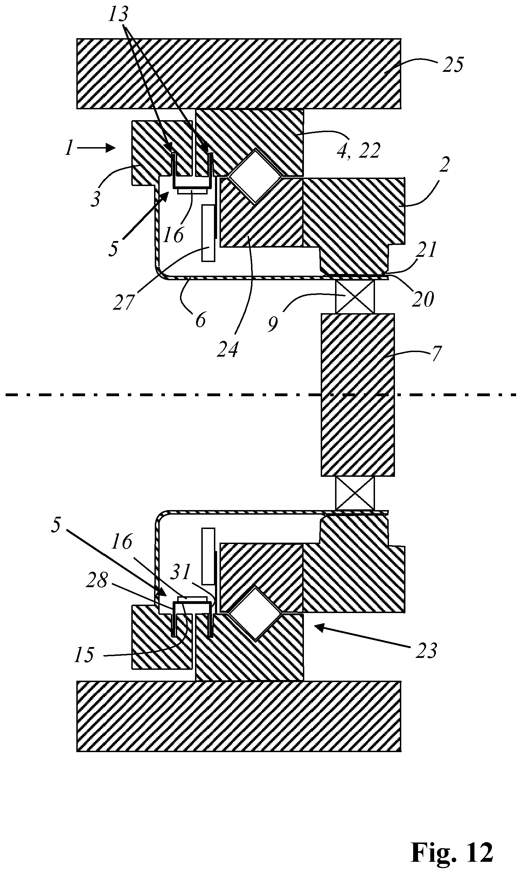

Figur 12 zeigt ein drittes Ausführungsbeispiel eines erfindungsgemäßen Getriebes in einer Querschnittsdarstellung entlang der Mittelachse, das als Spannungswellengetriebe ausgebildet ist. Das Spannungswellengetriebe hat ein Getriebebauteil 1, welches ein Drehmoment überträgt. Das Getriebebauteil 1 weist ein erstes, ringförmiges Getriebebauteilelement 3 und ein zweites Getriebebauteilelement 4 auf, die mittels mehreren Verbindern 5, die jeweils an dem ersten Getriebebauteilelement 3 und an dem zweiten Getriebebauteilelement 4 befestigt ist, elastisch beweglich miteinander verbunden sind.

Das erste Getriebebauteilelement 3 ist als Ring ausgebildet und bildet einen Flansch des hutförmig ausgebildeten und mit einer Außenverzahnung 20 versehenen Flexsplines 6 des Spannungswellengetriebes. Die Außenverzahnung 20 des Flexsplines 6 steht an zwei gegenüberliegenden Stellen mit der Innenverzahnung 21 eines Circularsplines 2 in Zahneingriff. Das erste Getriebebauteilelement 3 weist mehrere radiale Steckausnehmungen 13 für Steckabschnitte 14 der im Querschnitt u-förmig ausgebildeten Verbinder 5 auf. Das zweite Getriebebauteilelement 4 ist als Außenring 22 eines Kreuzrollenlagers 23 ausgebildet, das drehfest mit einem Getriebegehäuse 25 verbunden ist. Der Innenring 24 des Kreuzrollenlagers 23 ist drehfest mit dem Circularspline 2 verbunden und weist ebenfalls mehrere radiale Steckausnehmungen 13 für Steckabschnitte 14 der Verbinder 5 auf.

Das Spannungswellengetriebe weist, wie bereits erwähnt, einen radialflexiblen außenverzahnten Flexspline 6 auf, der in dem von einem Circularspline 2 umgebenen Raumvolumen angeordnet ist. Innerhalb des Flexsplines 6 ist ein ovaler Wellengeneratoreinsatz 7 rotierbar angeordnet, dessen Außenumfang 8 einen Lagersitz für ein radialflexibles Wälzlager 9 aufweist. Über das radialflexible Wälzlager 9 steht der Wellengeneratoreinsatz 7 mit dem radialflexiblen Flexspline 6 in Kontakt. Das radialflexible Wälzlager 9 ermöglicht es, den Wellengeneratoreinsatz 7 relativ zu dem Circularspline 2 rotieren zu können. Der Wellengeneratoreinsatz 7 biegt das Wälzlager 9 und das die Außenverzahnung 20 aufweisende Ende des Flexsplines 6 zu einer ovalen Form, um die Innenverzahnung 21 des Circularsplines 2 und die Außenverzahnung 20 des Flexsplines 6 in der Hochachse des ovalen Wellengeneratoreinsatzes 7 miteinander in Eingriff zu bringen.

Beispielsweise können der Wellengeneratoreinsatz 7 als Getriebeantrieb und der Circularspline 2 als Getriebeabtrieb fungieren, während der über das Getriebebauteil 1 an dem Getriebegehäuse 25 befestigte Flexspline 6 als festgehaltene Welle fungiert.

Das Getriebe weist außerdem eine Steuerungsvorrichtung 27 mit einer ringförmigen oder ringsegmentförmigen Platine auf, die an dem Außenring befestigt ist und die die Messsignale der Sensoren, insbesondere der Dehnungsmesstreifen 16, empfängt. Die Platine kann auch eine andere Form aufweisen. Beispielsweise kann das Getriebe außerdem Drehmomentsensor weitere (nicht dargestellte) Sensoren aufweisen, beispielsweise einen (nicht dargestellten) Temperatursensor und/oder einen (nicht dargestellten) Vibrationssensor. Die weiteren Sensoren können jeweils an einem der Verbinder angeordnet sein. Die weiteren Sensoren können ihre Messsignale ebenfalls an die Steuerungsvorrichtung 27 übermitteln.

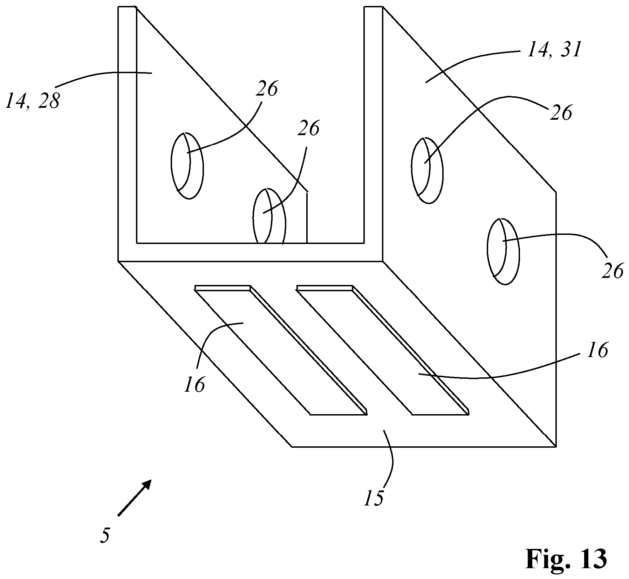

Die Figur 13 zeigt ganz schematisch eine perspektivische Detailansicht eines der Verbinder 5 des dritten Ausführungsbeispiels eines erfindungsgemäßen Getriebes. Die beiden Schenkel des u-förmigen Verbinders 5 fungieren als Befestigungsabschnitte 28, die als Steckabschnitte 14 in die radialen Steckausnehmungen 13 des ersten Getriebebauteilelements 3 und des zweiten Getriebebauteilelements 4 eingesteckt werden. Zusätzlich kann eine (in der Figur 12 nicht dargestellte) Befestigung mittels (nicht dargestellter) Schrauben erfolgen, die durch Bohrungen 26 in den Schenkeln des u-förmigen Verbinders 5 verlaufen. Der die Schenkel des u-förmigen Verbinders 5 verbindende Abschnitt fungiert als Verformungsabschnitt 15, auf den Dehnungsmesstreifen 16 zum Erfassen der jeweiligen elastischen Verformung aufgeklebt sind.

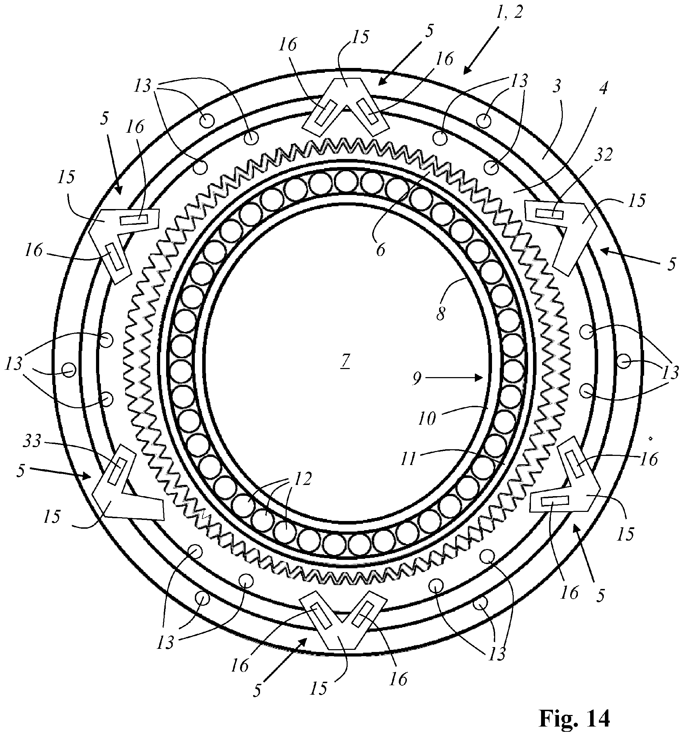

Figur 14 zeigt ganz schematisch ein viertes Ausführungsbeispiel eines erfindungsgemäßen Getriebes, das im Wesentlichen dem ersten Ausführungsbeispiel entspricht, wobei jedoch im Unterscheid zu dem ersten Ausführungsbeispiel insgesamt sechs der Verbinder 5 vorhanden sind, wobei vier der Sensoren 5 Dehnungsmessstreifen 16 aufweisen, während ein Verbinder 5 einen Temperatursensor 32 und ein weiterer Verbinder 5 einen Vibrationssensor 33 aufweist.

### Bezugszeichenliste:

- 1: Getriebebauteil
- 2: Circularspline
- 3: erstes Getriebebauteilelement
- 4: zweites Getriebebauteilelement
- 5: Verbinder
- 6: Flexspline
- 7: Wellengeneratoreinsatz
- 8: Außenumfang
- 9: Wälzlager
- 10: Innenring
- 11: Außenring
- 12: Wälzkörper
- 13: Steckabschnitt
- 14: Steckausnehmung
- 15: Verformungsabschnitt
- 16: Dehnungsmessstreifen
- 17: Kraft
- 18: Kraft
- 19: Kraft
- 20: Außenverzahnung
- 21: Innenverzahnung
- 22: Außenring
- 23: Kreuzrollenlager
- 24: Innenring
- 25: Getriebegehäuse
- 26: Bohrungen
- 27: Steuerungsvorrichtung
- 28: Befestigungsabschnitt
- 29: Getriebeantriebswelle
- 30: Getriebeabtriebswelle
- 31: Zweiter Befestigungsabschnitt
- 32: Temperatursensor
- 33: Vibrationssensor

## Patentansprüche

1. Getriebe mit einem Getriebegehäuse (25) und mit einem von dem Getriebegehäuse (25) verschiedenen Getriebebauteil (1), welches ein Drehmoment überträgt oder ein Drehmoment abstützt, **dadurch gekennzeichnet, dass** das Getriebebauteil (1) ein erstes Getriebebauteilelement (3) und ein zweites Getriebebauteilelement (4) aufweist, die mittels wenigstens eines Verbinders (5), der an dem ersten Getriebebauteilelement (3) und/oder an dem zweiten Getriebebauteilelement (4) befestigt ist, elastisch beweglich, insbesondere relativ zueinander drehbar, miteinander verbunden sind.

2. Getriebe nach Anspruch 1, **dadurch gekennzeichnet, dass** die Befestigung des Verbinders (5) mit dem ersten Getriebebauteilelement (3) und/oder dem zweiten Getriebebauteilelement (4) zerstörungsfrei lösbar ausgebildet ist.

3. Getriebe Anspruch 1 oder 2, **dadurch gekennzeichnet, dass** der Befestigungsabschnitt als Steckabschnitt (13) ausgebildet ist oder einen Steckabschnitt (13) aufweist, der, insbesondere passgenau, in eine Steckausnehmung (14) des Getriebebauteilelements (3, 4) eingreift.

4. Getriebe nach einem der Ansprüche 1 bis 3, **dadurch gekennzeichnet, dass**
a. der Verbinder (5) wenigstens einen Druckabschnitt, insbesondere einen Druckstab, aufweist, der durch das Drehmoment auf Druck belastet wird, und/oder dass
b. der Verbinder (5) wenigstens einen Zugabschnitt, insbesondere einen Zugstab, aufweist, der durch das Drehmoment auf Zug belastet wird.

5. Getriebe nach den Ansprüchen 4 und 5, **dadurch gekennzeichnet, dass**, insbesondere je nach Vorzeichen des Drehmomentes, wenigstens ein Schenkel des Verbinders (5) der Zugabschnitt und ein weiterer Schenkel des Verbinders (5) der Druckabschnitt ist.

6. Getriebe nach einem der Ansprüche 1 bis 5, **dadurch gekennzeichnet, dass** das Getriebe wenigstens eines der folgenden Merkmale a bis e aufweist:
a. der Verbinder (5) ist als Sensor ausgebildet ist oder ist Teil eines Sensors,
b. der Sensor ist als Temperatursensor ausgebildet,
c. der Sensor ist als Vibrationssensor ausgebildet,
d. der Sensor ist als Verformungssensor ausgebildet,
e. der Sensor weist wenigstens einen Dehnungsmesstreifen (16) auf.

7. Getriebe nach einem der Ansprüche 1 bis 6, **dadurch gekennzeichnet, dass** der wenigstens eine Verbinder (5) dazu ausgebildet ist zu brechen und/oder die Befestigung des Verbinders (5) mit dem Getriebebauteilelement (3, 4) dazu ausgebildet ist sich zu lösen, wenn das Drehmoment einen vorgegebenen Wert übersteigt.

8. Getriebe nach einem der Ansprüche 1 bis 7, **dadurch gekennzeichnet, dass** das Getriebe wenigstens eines der folgenden Merkmale a bis g aufweist:
a. das Getriebebauteil (1) ist ringförmig ausgebildet,
b. das erste Getriebebauteilelement (3) ist ringförmig ausgebildet,
c. das zweite Getriebebauteilelement (4) ist ringförmig ausgebildet,
d. das Getriebebauteil (1) weist eine Verzahnung auf,
e. das erste Getriebebauteilelement (3) weist eine Verzahnung auf,
f. das zweite Getriebebauteilelement (4) weist eine Verzahnung auf,
g. das Getriebebauteil (1) ist Teil eines Lagers, mittels dem eine Getriebewelle rotierbar gelagert ist.

9. Getriebe nach einem der Ansprüche 1 bis 8, **dadurch gekennzeichnet, dass**
a. das Getriebe mehrere gleich ausgebildete Verbinder (5) aufweist, oder dass
b. das Getriebe mehrere hinsichtlich Größe und Form gleich ausgebildete Verbinder (5) aufweist, oder dass
c. das Getriebe mehrere hinsichtlich Größe und Form gleich ausgebildete Verbinder (5) aufweist, von denen sich jedoch wenigstens zwei hinsichtlich des Vorhandenseins oder der Art des Sensors und/oder hinsichtlich ihrer Verformungseigenschaften, insbesondere hinsichtlich ihrer Elastizität, voneinander unterscheiden.

10. Aktuator beinhaltend einen Antriebsmotor und ein Getriebe nach einem der Ansprüche 1 bis 9, das dem Antriebsmotor triebtechnisch nachgeschaltet ist, vorzugsweise mit einer Steuerungsvorrichtung, die Steuerungsvorrichtung dazu ausgebildet ist, den Antriebsmotor zu drosseln und/oder anzuhalten, wenn ein vorgegebener oder vorgebbarer Sensormesswert überschritten wird oder wenn ein vorgegebener oder vorgebbarer Sensormesswert unterschritten wird oder wenn ein vorgegebener oder vorgebbarer Sensormesswertbereich verlassen wird.

11. Robotergelenk, welches wenigstens ein Getriebe nach einem der Ansprüche 1 bis 9 und/oder einen Aktuator nach Anspruch 10 aufweist, oder Roboter, der wenigstens ein Getriebe nach einem der Ansprüche 1 bis 9 und/oder einen Aktuator nach Anspruch 10 aufweist.

12. Fahrzeugbaugruppe, insbesondere Fahrwerk oder Lenkung oder aktives Fahrwerk für ein Kraftfahrzeug, die wenigstens ein Getriebe nach einem der Ansprüche 1 bis 9 und/oder einen Aktuator nach Anspruch 10 aufweist.

13. Verfahren zum Herstellen von Getrieben nach einem der Ansprüche 1 bis 9, beinhaltend folgende Schritte:
a. Bereitstellen einer Vielzahl von gleichen ersten Getriebebauteilelementen (3) und gleichen zweiten Getriebebauteilelementen (4), die jeweils mittels wenigstens eines Verbinders (5), der an dem ersten Getriebebauteilelement (3) und/oder an dem zweiten Getriebebauteilelement befestigbar ist, elastisch beweglich zum Bilden eines Getriebebauteils, welches ein Drehmoment überträgt oder ein Drehmoment abstützt, miteinander verbindbar sind,
b. Bereitstellen einer Vielzahl von ersten Verbindern (5), die einen Sensor aufweisen oder als Sensor ausgebildet sind,
c. Bereitstellen einer Vielzahl von ersten Verbindern (5), die keinen Sensor aufweisen und nicht als Sensor ausgebildet sind,
d. Zusammenfügen von jeweils einem der bereitgestellten ersten Getriebebauteilelemente (3) und einem der bereitgestellten zweiten Getriebebauteilelemente (4) mittels wenigstens eines ersten Verbinders (5), um ein Getriebe mit Sensorik herzustellen, und
e. Zusammenfügen von jeweils einem der bereitgestellten ersten Getriebebauteilelemente (3) und einem der bereitgestellten zweiten Getriebebauteilelemente (4) mittels wenigstens eines zweiten Verbinders (5), um ein Getriebe ohne Sensorik herzustellen.

14. Verfahren nach Anspruch 13, **dadurch gekennzeichnet, dass** die ersten Getriebebauteilelemente (3) und die zweiten Getriebebauteilelemente (4) mit einer höheren Anzahl von Verbindern miteinander verbunden werden, wenn eine höhere Drehsteifigkeit des ersten Getriebebauteilelements (3) relativ zu dem zweiten Getriebebauteilelement (4) gewünscht ist, und dass die ersten Getriebebauteilelemente (3) und die zweiten Getriebebauteilelemente (4) mit einer niedrigeren Anzahl von Verbindern miteinander verbunden werden, wenn eine niedrigere Drehsteifigkeit des ersten Getriebebauteilelements (3) relativ zu dem zweiten Getriebebauteilelement (4) gewünscht ist.

15. Verfahren nach Anspruch 13 oder 14, **dadurch gekennzeichnet, dass**
a. zum Verbinden der ersten Getriebebauteilelemente (3) und der zweiten Getriebebauteilelemente (4) jeweils hinsichtlich Größe und Form gleich ausgebildete, Verbinder (5) verwendet werden, oder dass
b. zum Verbinden der ersten Getriebebauteilelemente (3) und der zweiten Getriebebauteilelemente (4) jeweils hinsichtlich Größe und Form gleich ausgebildete Verbinder (5) verwendet werden, von denen sich jedoch mindestens zwei hinsichtlich des Vorhandenseins oder der Art des Sensors und/oder hinsichtlich ihrer Verformungseigenschaften, insbesondere hinsichtlich ihrer Elastizität, voneinander unterscheiden.
